# EUROPEAN PATENT APPLICATION

(11) **EP 4 564 300 A1**
(43) Date of publication of application: **04.06.2025**
(21) Application number: 23844952.4
(22) Date of filing: 04.05.2023
(51) Int. Cl.: G06T 13/00

(54) **ANIMATION PROCESSING METHOD AND APPARATUS, AND ELECTRONIC DEVICE AND COMPUTER-READABLE STORAGE MEDIUM**

(30) Priority: 28.07.2022 CN 202210896176
(71) Applicant: Huizhou TCL Mobile Communication Co., Ltd, Guangdong 516006 (CN)
(72) Inventor: LEI, Ming, Huizhou, Guangdong 516006 (CN)
(74) Representative: Murgitroyd & Company
(86) International application number: PCT/CN2023/092112
(87) International publication number: WO 2024/021737

(57) **Abstract**

Disclosed in the present application are an animation processing method and apparatus, and an electronic device and a computer-readable storage medium. In the present application, the method comprises: acquiring cyclic layers of a target animation, and acquiring cyclic playing information corresponding to the target animation; generating a target cyclic layer on the basis of the cyclic layers and the cyclic playing information; and according to the target animation and the target cyclic layer, generating an animation file including the cyclic playing information. By means of the present application, an application engineer does not need to design a code corresponding to cyclic playing information, thereby reducing the error rate and improving the development efficiency.

## Description

This application claims the priority of Chinese Patent Application No. 2022108961764, entitled "Animation Processing Method and Apparatus, and Electronic Device and Computer-Readable Storage Medium", filed on July 28, 2022, the disclosure of which is incorporated herein by reference in its entirety.

### FIELD OF THE DISCLOSURE

The present disclosure relates to the field of animation technology, and more particularly, to an animation processing method, an apparatus, an electronic device, and a computer-readable storage media.

### BACKGROUND

With the development of science and technology, animations are applied to all kinds of applications more and more widely. For example, an animation can be applied to the interface of the application to make the interface of the application more vivid. Animations are generally designed by the animation designer, who gets the animation files, and then gives the animation files to the application engineer to import into the application.

However, the animation can be played in a loop, the animation designer needs to additionally provide the loop information to the application engineer, and the application engineer then sets the code corresponding to the loop information to control the playback of the animation. This flow not only makes the interaction between the animation designer and the application engineer have more interactions, but also the code corresponding to the loop information is more complex, easy to make errors, and leads to a low development efficiency.

### Technical problem

The conventional animation design method has the technical issues of more interaction between animation designers and application engineers, and the code corresponding to the loop information being more complex, easy to make mistakes, and leading to development efficiency is low.

### TECHNICAL SOLUTION

One objective of an embodiment of the present disclosure is to provide an animation processing method and a device, in order to solve the above technical issues of more interaction between animation designers and application engineers, and the code corresponding to the loop information being more complex, easy to make mistakes, and leading to development efficiency is low.

According to an embodiment of the present disclosure, a method of playing animations is disclosed. The method comprises:
animation processing method, comprising:
obtaining a loop layer of a target animation, and obtaining a loop playback information corresponding to the target animation;
generating a target loop layer based on the loop layer and the loop playback information; and
generating an animation file containing the loop playback information according to the target animation and the target loop layer.

According to another embodiment of the present disclosure, an animation processing device, comprising:
an obtaining module, configured to obtain a loop layer of a target animation, and a loop playback information corresponding to the target animation;
a layer generation module, configured to generate a target loop layer based on the loop layer and the loop playback information; and
a file generation module, configured to generate an animation file containing the loop playback information according to the target animation and the target loop layer.

In addition, an embodiment of the present disclosure proposes an electronic device that includes a processor and a memory storing computer instructions executable by the processor to perform the method of playing animations provided in the embodiment of the present disclosure.

In addition, an embodiment of the present disclosure proposes a computer-readable storage medium storing computer instructions executable by a processor to perform the method of playing animations provided in the embodiment of the present disclosure.

In addition, an embodiment of the present disclosure provides a computer program product storing computer instructions executable by a processor to perform the method of playing animations provided in the embodiment of the present disclosure.

### Advantageous effect

In an embodiment of the present application, the loop layer of the target animation is obtained, and the loop playback information corresponding to the target animation is obtained. Then, based on the loop layer and loop playback information, the target loop layer is generated. Finally, according to the target animation and the target loop layer, an animation file containing loop playback information is generated.

That is, in an embodiment of the present application, a target loop layer is generated according to the loop layer and the loop playback information, so that the target loop layer contains loop playback information and thus the animation file generated according to the target animation and the target loop layer contains loop playback information. In this way, the animation designer does not need to additionally give the loop playback information to the application engineer, the interaction between the animation designer and the application engineer is reduced, and the application engineer is not required to design the code corresponding to the loop playback information, so that the error rate is reduced and the development efficiency is improved.

### BRIEF DESCRIPTION OF THE DRAWINGS

In order to more clearly illustrate the technical solutions in the embodiments of the present disclosure, the drawings required to be used in the description of the embodiments will be briefly introduced below, and it is obvious that the drawings described below are only some embodiments of the present disclosure, and for those skilled in the art, other drawings can be acquired according to these drawings without creative labor.
FIG. 1 is a flow chart of an animation processing method according to an embodiment of the present application.
FIG. 2 is a diagram of an editing interface according to an embodiment of the present application.
FIG. 3 is a diagram of a first position and a second position according to an embodiment of the present application.
FIG. 4 is a diagram of a format of the loop playback information according to an embodiment of the present application.
FIG. 5 is a diagram of a key frame and a differential frame according to an embodiment of the present application.
FIG. 6 is a diagram of a key frame and a differential frame according to another embodiment of the present application.
FIG. 7 is a diagram of a key frame and a differential frame according to another embodiment of the present application.
FIG. 8 is a diagram of a library file and a target application according to an embodiment of the present application.
FIG. 9 is a diagram of an animation processing device according to an embodiment of the present application.
FIG. 10 is a diagram of an electronic device according to an embodiment of the present application.

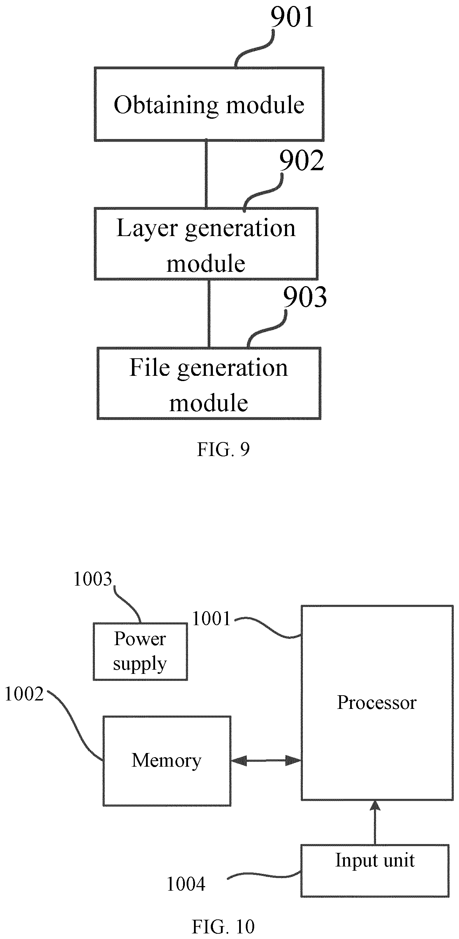

FIG. 10 is a schematic diagram of an electronic device according to an embodiment of the present disclosure.

### DETAILED DESCRIPTION of THE PRESENT INVENTION

The technical solutions in the embodiments of the present disclosure will be clearly and completely described below in conjunction with the accompanying drawings in the embodiments of the present disclosure, and it is obvious that the described embodiments are only part of the embodiments of the present disclosure, not all embodiments. Based on the embodiments in the present disclosure, all other embodiments acquired by a person skilled in the art without creative work fall within the scope of protection of the present disclosure.

An embodiment of the present disclosure provides an animation processing method, an apparatus, an electronic device, and a computer-readable storage media. The animation processing device can be integrated in the electronic device which can be a server, a terminal and other equipment.

The server can be an independent physical server, a server cluster or a distributed system composed of multiple physical servers, or a cloud server that provides cloud services, cloud databases, cloud computing, cloud functions, cloud storage, network services, cloud communications, middleware services, domain name services, security services, Content Delivery Network (CDN), and basic cloud computing services such as big data and artificial intelligence platforms.

The terminal can be but is not limited to a smartphone, a tablet, a laptop, a desktop computer, a smart speaker, a smart watch, etc. The terminals and the server may be connected directly or indirectly by wired or wireless communication, and the present disclosure is not limited herein.

In addition, "plurality" in the embodiment of the present disclosure refers to two or more embodiments. The words "first" and "second" in the embodiment of the present disclosure are used to distinguish descriptions and cannot be understood as implying relative importance.

Each of them is explained in detail below. It should be noted that the following embodiments are not used as a limitation on the preferred order of embodiments.

In this embodiment, it will be described from the perspective of an animation playback device, and in order to facilitate the description of the animation processing method of the present disclosure, the following will be described in detail with the animation playback device integrated in the terminal, that is, the terminal will be used as the execution subject to be detailed.

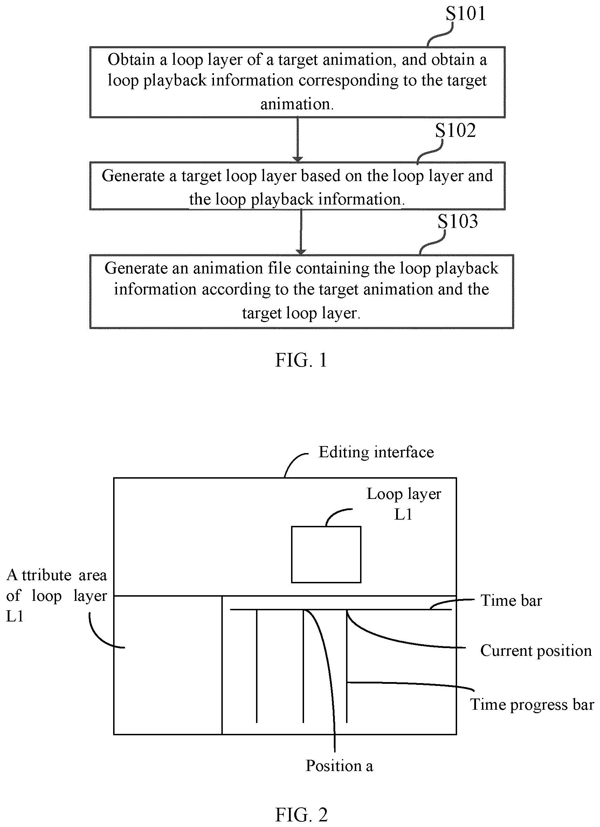

Please refer to FIG. 1. FIG. 1 is a diagram of the animation processing method according to an embodiment of the present disclosure. The animation processing method comprises step S101-S104.

S101: obtaining a loop layer of a target animation, and obtaining the loop playback information corresponding to the target animation.

The target animation can comprise a loop layer, and the terminal can get the loop layer from the target animation. Alternatively, the terminal can also take the layer creation instruction for the target animation and then create the loop layer of the target animation according to the layer creation instruction.

The target animation can refer to an animation that has already been edited, or to an animation that is being edited. For example, the loop information can include the loop number (number of loops) of the target animation of the loop playback, the start frame, the end frame, the duration of the loop playback, the rotation angle during loop playback, the zooming in animation during loop playback, and zooming out on the animation during loop playback.

The terminal can obtain the loop information of the target animation from other terminals, or the terminal can also obtain the loop information in response to the editing operation of the loop layer.

The loop layer can be visible or invisible. For example, the loop layer may be a text layer or an empty object layer, and thus is not limited in this embodiment.

S102: generating a target loop layer based on the loop layer and the loop playback information.

After the terminal obtains the loop layer and loop playback information, the terminal can record the loop playback information in the loop layer, so as to obtain the target loop layer containing the loop playback information.

In an embodiment, the step of generating the target loop layer based on the loop layer and the loop playback information comprises:
displaying the loop layer of the target animation; and
in response to an editing operation on the loop layer, generating the target loop layer containing the loop playback information.

In this embodiment, the loop layer of the target animation can be displayed in the editing interface of the target animation, so that the user can edit the loop layer, and the terminal can record the loop playback information in the loop layer in response to the editing operation on the loop layer, so as to obtain a target loop layer containing loop playback information. Alternatively, the terminal can, in response to the editing operation on the loop layer, obtain the loop playback information and record the loop playback information in the loop layer, so as to obtain the target loop layer containing the loop playback information.

The editing operation on a loop layer can refer to an editing operation on the loop layer, or to an operation on the attribute area of the loop layer. For example, the loop layer can be the loop layer L1, the editing interface of the loop layer L1 and the target animation can be as shown in FIG. 2, so that a user can edit the loop layer L1 or the attribute area of the loop layer L1.

In another embodiment, the editing operation on the loop layer may include a first editing operation and a second editing operation, and the loop playback information may include the start frame, the end frame and the playback number (number of playbacks) of the loop playback. In addition, the step of generating the target loop layer containing the loop playback information in response to the editing operation on the loop layer comprises:
in response to the first editing operation on the loop layer, determining the start frame and the end frame of the loop playback of the target animation;
in response to a second editing operation on the loop layer, obtaining the playback number of the loop playback; and
generating the target loop layer according to the start frame, the end frame and the playback number.

In this embodiment, the start frame and the end frame of the loop playback of the target animation can be first determined in response to the first editing operation on the loop layer. The playback number can be obtained in response to the second edit operation on the loop layer, and then the playback number playback, the start frame and the end frame are automatically recorded in the loop layer, so that the target loop layer is obtained.

The types of the first editing operation and the second editing operation can be set according to the actual situation. For example, the first editing operation may be a click operation or a drag operation, etc., and the second editing operation may be an input operation or a selection operation, etc. There is no limitation of these operations in this embodiment.

In this embodiment, the loop layer can be edited to obtain loop playback information and obtain a target loop layer containing loop playback information, which is more convenient.

Optionally, the step of determining the start frame and the end frame of the loop playback of the target animation in response to the first editing operation on the loop layer comprises:
in response to the first editing operation on the loop layer, determining a first position and a second position where a time progress bar of the target animation is located;
determining an animation frame corresponding to the first position where the time progress bar of the target animation is located as the start frame of the loop playback, and
determining an animation frame corresponding to the second position where the time progress bar is located as the end frame of the loop playback.

The first editing operation can be a one-time operation. For example, the terminal takes the current position of the time progress bar as the second position in response to a click on the loop layer, and then the terminal takes the previous position of the current position as the first position. The previous position of the current position can refer to the last position where the time bar was before it reached the current position.

When the current position of the time progress bar is shown in FIG. 2, the previous position of the current position can be position a.

Alternatively, the first editing operation may include multiple operations. For example, the first editing operation may be a click operation, and the terminal records the first position of the time progress bar of the target animation in response to the click operation on the loop layer, and the terminal records the second position of the time progress bar of the target animation in response to the click operation on the loop layer.

At this point, the step of determining the first position and the second position where the time progress bar of the target animation is located in response to the first editing operation on the loop layer comprises:
in response to the first editing operation on the loop layer, taking a current position where the time progress bar of the target animation is located as the first position; and
in response to the dragging operation of the time progress bar, taking a position to which the time progress bar is moved from the current position as the second position.

The terminal can move the time progress bar from the current position to the second position and record the second position in response to dragging the time progress bar. Alternatively, the terminal can move the time progress bar to the second position in response to dragging the time progress bar, and then the terminal records the second position again in response to the first editing operation on the loop layer.

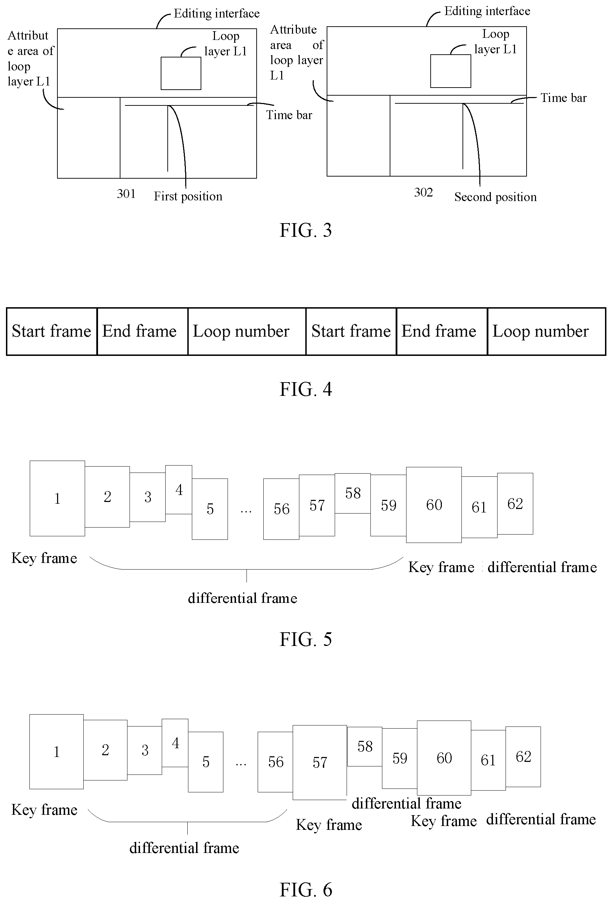

As shown in FIG. 3, the first editing operation is a click operation, and the terminal records the current position where the time progress bar of the target animation is located in response to the click operation to the loop layer. That is, the terminal records the first position, and the first position can be shown as 301 in FIG. 3. And then, the terminal moves the time progress bar from the current position to the second position in response to the dragging operation to the time progress bar, and the second position can be shown as 302 in FIG. 3. The terminal, then in response to responds to the click operation on the loop layer again, records the second position of the time progress bar of the target animation.

In this embodiment, the animation frame corresponding to the first position where the time progress bar of the target animation is located is determined as the start frame of the loop playback, and the animation frame corresponding to the second position where the time progress bar is located is determined as the end frame of the loop playback. Thus, the user is not required to determine the identifiers of the start frame and the end frame of the loop playback.

In another embodiment, the target animation may comprise a plurality of loop playback information. When each time the target animation is played, a loop playback information can be corresponded. For example, when the target animation is played for the second time, it can correspond to the loop-playback information y. In this case, the target loop layer can include a plurality of loop information and the step of generating a target loop layer containing loop playback information in response to the editing operation on the loop layer comprises:
in response to a plurality of editing operations on the loop layer, obtaining the plurality of loop playback information of the target animation; and
recording the plurality of loop playback information in the loop layer to obtain the target loop layer.

Alternatively, the target animation may include a plurality of segmented animations, each segmented animation corresponds to a loop information, and the loop information corresponding to each divisional animation is stored in the same loop layer. In this case, the step of generating the target loop layer containing the loop playback information in response to the editing operation on the loop layer comprises:
in response to the editing operation on the loop layer, generating the target loop layer containing the loop playback information according to the loop playback information corresponding to each segmented animation.

Optionally, the step of generating the target loop layer containing the loop playback information according to the loop playback information corresponding to each segmented animation in response to the editing operation on the loop layer comprises:
in response to a first editing operation on the loop layer, determining a start frame and an end frame of the segmented animation in the target animation;
in response to a second editing operation on the loop layer, obtaining the loop number of the segmented animation;
returning to perform the step of determining the start frame and the end frame of the segmented animation in the target animation in response to the first editing operation until the loop playback information of each segmented animation is obtained; and
generating the target loop layer according to the loop playback information of each segmented animation.

The target animation comprises a segmented animation 1 and a segmented animation 2. The terminal can determine the start frame and the end frame of the loop playback of the segmented animation 1 in response to the first editing operation on the loop layer, and the terminal obtains the loop number of the segmented animation 1 in response to the second editing operation on the loop layer; and then the terminal, again in response to the first editing operation on the loop layer, determines the start frame and the end frame of the loop playback of the segmented animation 2; and the terminal determines the loop number of the looped playback of the segmented animation 2 in response to the second editing operation on the loop layer. And then, the terminal obtains the target loop layer according to the start frame, the end frame, and the number of loop number of the segmented animation 1 and the start frame, the end frame, and the loop number of the segmented animation 2.

When the start frame and the end frame of a segmented animation are determined, the segmented animation is determined. For example, when the target animation has not been segmented, the start frame and the end frame of the loop playback are determined in response to the first editing operation of the loop layer such that the segmented animation is determined. That is, the animation frames between the start frame, the start frame and the end frame form the segmented animation 1. In other words, the start frame and the end frame of the loop playback of the segmented animation are the start frame and the end frame of the segmented animation.

Or, the target animation can be segmented in advance to obtain each segmented animation. And then, in response to the first editing operation on the loop layer, the start frame and end frame of the loop playback of the segmented animation determined. At this time, the start frame of the loop playback of the segmented animation may be the same or different from the start frame of the segmented animation, and the end frame of the loop playback of the segmented animation may be or may not be the same as the end frame of the segmented animation.

In this embodiment, the target animation has a plurality of loop playback information, and the loop playback information is stored in the same loop layer. Therefore, there is no need for one loop layer to store only one loop playback information. This increases the convenience of storing loop playback information. Furthermore, because there is only one loop-in layer, the animation file corresponding to the target animation can be obtained more quickly.

In another embodiment, the loop playback information corresponding to each segmented animation may also be stored in different loop layers. That is, segmented animations correspond to multiple loop playback information stored in different loop layers. Here, the step of generating the target loop layer containing loop playback information in response to the editing operation on the loop layer comprises:
taking a first loop layers of the plurality of loop layers as a candidate loop layer;
displaying the candidate loop layer;
in response to an editing operation on the candidate loop layer, obtaining the target loop layer containing a loop playback information corresponding to a segmented animation corresponding to the candidate loop layer; and
taking a second loop layer of the plurality of loop layers as the candidate loop layer, and returning to the steps displaying the candidate loop layer until the target loop layer corresponding to each segmented animation in the target animation is generated.

For example, a plurality of loop layers are loop layers L1 and L2, where the first loop layer is the loop layer L1, and the second loop layer is the loop layer L2. The segmented animation corresponding to the loop layer L1 is the segmented animation 1, and the segmented animation corresponding to the loop layer L2 is the segmented animation 2. The loop layer L1 is taken as the candidate loop layer, and then the terminal, in response to the editing operation of the candidate loop layer, obtains a target loop layer containing the loop playback information of the segmented animation 1. Then, the terminal takes the loop layer L2 as the candidate loop layer in response to the editing operation of the candidate loop layer, and obtains the target loop layer containing the loop playback information of the segmented animation 2.

When the target animation includes a plurality of segmented animations, only a part of the segmented animations in the target animation can be played in a loop. That is, a part of the segmented animations in the target animation has corresponding loop information, but the other part of the segmented animations in the target animation does not have corresponding loop information. In this case, the language "until the target loop layer corresponding to each segmented animation in the target animation is generated" could mean until the target loop layer corresponding to each segmented animation, which needs to be played in a loop, in the target animation is generated.

In another embodiment, the loop layer can be achieved by an empty object layer of an animation editor. In this case, the step of displaying the target animation comprises:
displaying a layer selection interface, wherein the layer selection interface comprises an empty object layer control; and
in response to a confirmation operation to the empty object layer control, displaying the empty object layer of the target animation.

Here, the display format of the layer selection interface can be selected according to the actual situation. For example, the layer selection interface may be a floating layer or a pop-up window on the editing interface of the target animation, and is not limited in this embodiment.

The empty object layer is an invisible layer that has the attributes of a visible layer. Since the empty object layer is an invisible layer, the loop layer is implemented through the empty object layer, so that the loop playback information can be stored in the animation file, and the target animation can be played without visual impact on the target animation.

The type of animation editor can be selected according to the actual situation. For example, the animation editor can be an AE (After Effects) editor or a PR (Adobe Premiere) editor, and is not limited in this embodiment.

In another embodiment, the step of displaying the loop layer of the target animation comprises:
getting a startup instruction for an animation editor;
loading a layer plug-in from a plug-in file of the animation editor according to the start-up instruction and starting the animation editor to display a layer control corresponding to the layer plug-in in an interface of the animation editor; and
in response to a trigger action on the layer control, displaying the loop layer of the target animation.

In this embodiment, a loop layer may also exist in the form of a plug-in. And then, when the animation editor is activated according to the startup instruction, the layer plug-in is read and loaded from the plug-in file of the animation editor, so that, the interface of the animation editor includes a layer control corresponding to the layer plug-in after the animation editor is successfully activated. The terminal can then establish a loop layer for the target animation and display the loop layer for the target animation in response to the trigger action on the layer control.

When the plug-in file of the animation editor does not include the layer plug-in corresponding to the loop layer, the animation method could further comprises following steps before obtaining the startup instruction of the animation editor:
obtaining a code file corresponding to the loop layer;
generating the layer plug-in corresponding to the loop layer according to the code file corresponding to the loop layer; and
storing the layer plug-in in the plug-in file of the animation editor.

In another embodiment, the code file corresponding to the loop layer can also be stored in the installation package of the animation editor. When the animation editor is successfully installed, the interface of the animation editor includes a layer control, and then the terminal establishes the loop layer of the target animation and displays the loop layer of the target animation in response to the trigger operation of the layer control.

S103: generating an animation file containing the loop playback information according to the target animation and the target loop layer.

After the terminal obtains the target loop layer, it can automatically generate an animation file containing the loop playback information based on the target animation and the target loop layer. Alternatively, after obtaining the target loop layer, the terminal can generate an animation file containing the loop playback information based on the target animation and the target loop layer according to an export instruction when receiving the export instruction.

The format of the animation file can be implemented according to the actual situation. For example, the format of the animation file may be in GIF format or pag format and is not limited herein.

Optionally, when there are a plurality of loop information, the format of the loop information in the animation file can be as shown in FIG. 4.

In order to reduce the size of the animation file and improve the speed of decoding the animation frame in the animation file, the animation frame in the animation file is differentiated. That is, the animation frame in the animation file includes a key frame and a differential frame. When it is a differential frame, only the difference information between the differential frame and the previous frame is stored in the animation file. When the start frame of the loop playback is a differential frame, in order to obtain the start frame of loop playback, the terminal needs to find the key frame corresponding to the differential frame and all differential frames between the differential frame and the start frame and perform a decoding and synthesizing operation according to the key frame and all the differential frames.

For example, as shown in FIG. 5, the first animation frame and the 60^{th} animation frame in the animation file are key frames, and the other animation frames in the animation file are differential frames. In this case, when the start frame of the loop playback is the 57^{th} animation frame, the first animation frame (which is the key frame of the 57^{th} animation frame) and all animation frames between the 57th animation frame and the 57^{th} frame animation frame need to be decoded and synthesized to obtain the start frame of the loop playback. This process is very time-consuming, and the amount of computation is very large, which is easy to cause a delay in the loop playback.

In order to solve the above issue, in some embodiments, the step of generating the animation file containing the loop playback information according to the target animation and the target loop layer comprises:
analyzing the target loop layer to obtain the loop playback information;
determining a start animation frame in the target animation corresponding to a starting indicator in the loop playback information;
when the start animation frame is a differential frame, modifying the start animation frame to be a key frame to obtain a modified target animation; and
generating the animation file corresponding to the target animation according to the modified target animation and the loop playback information.

For example, if the start indicator in the loop playback information is the 57^{th} frame, the terminal checks whether the 57^{th} frame in the target animation is a differential frame. At this time, the 57^{th} frame in the target animation is also the start frame in the target animation. Since the 57^{th} frame is a differential frame, the 57^{th} frame 57 is modified to a key frame, as shown in FIG. 6, to obtain a modified target animation.

In this embodiment, because the target loop layer can be analyzed to obtain the loop playback information, the start frame of the loop playback can be determined according to the loop playback information. Then when generating an animation file, the terminal can set the start frame of loop playback as a key frame, so that during loop playback, the start frame of loop playback can be directly rendered and played, without recursion backward. This reduces the amount of calculation and alleviates the delay of the loop playback.

In another embodiment, in order to reduce the size of the animation file while alleviating the loop playback delay, the step of modifying the start animation frame to a key frame to obtain the modified target animation when the start animation frame is a differential frame comprises:
when the start animation frame is the differential frame, modifying the start animation frame to be a key frame;
determining a number of target frames between the key frame closest to the start animation frame and the start animation frame in the target animation; and
when the number of target frames is less than a preset threshold, modifying the key frame closest to the start animation frame to be a differential frame to obtain the modified target animation

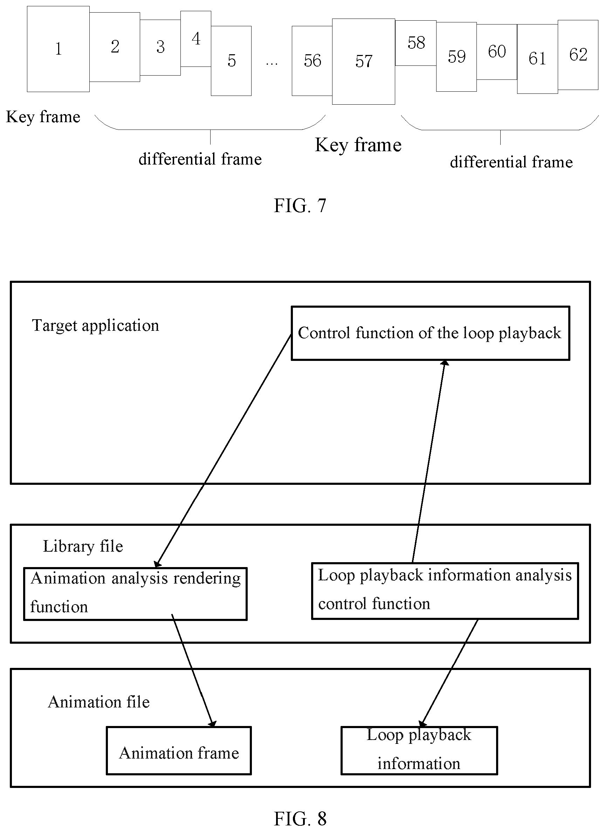

The key frame closest to the start animation frame can be a key frame that is after the start animation frame and closest to the start animation frame compared to other key frames. For example, as shown in FIG. 7, the start animation frame is the 57^{th} animation frame. Since the 60^{th} animation frame is after the 57^{th} animation frame, and the number of frames between the 60^{th} animation frame and the 57^{th} animation frame is the lowest, the 60^{th} animation frame is the key frame closest to the 57^{th} animation frame. Because the target number 3 of frames between the 60^{th} and 57^{th} frames (3 frames between the 60^{th} and 57^{th} frames) is less than the preset threshold, the 60^{th} frame is set as a differential frame to reduce the size of the animation file.

In another embodiment, the step of generating the animation file containing the loop playback information according to the target animation and the target loop layer comprises:
analyzing the target loop layer to obtain the loop playback information;
determining key frame information of the target animation according to the loop playback information; and
generating the animation file corresponding to the target animation according to the target animation, the loop playback information and the key frame information

The start frames in the loop playback information includes the 5^{th} and 50^{th} frames, and the 5^{th} and 50^{th} frames of the target animation are key frames.

In this embodiment, when the animation file is being generated, the target loop layer is first analyzed to obtain the loop playback information, and then the key frame information of the target animation is determined directly according to the loop playback information. Therefore, there is no need to first determine the key frame and differential frames and then modify the differential frame according to the loop playback information.

In another embodiment, the animation processing method further comprises following steps after the step of generating the animation file containing the loop playback information according to the target animation and the target loop layer:
obtaining a library file, wherein the library file comprises an animation analysis rendering function and a loop playback information analysis control function;
integrating the library file into the target application;
when the animation file is imported into the target application, analyzing the animation file based on the library file through the target application to obtain the target animation and the loop playback information; and
rendering the target animation based on the library file, and playing the target animation based on the loop information.

The target application can refer to the application that plays the target animation. The library file is integrated into the target application. For example, the library file can be stored in the executable file of the target application. Alternatively, the code corresponding to the library file can be stored in the installation package of the target application. For the way of integrating the library file in the target application, it can be determined according to the actual situation, and is not limited herein.

The animation analyzing and rendering function is used to analyze and render the animation in the animation file, and the loop playback information analysis control function is used to analyze the loop playback information in the animation file and control the playback of the animation according to the loop playback information.

Optionally, the library file includes an animation analyzing rendering function and a loop information analysis function, and the loop control function is stored in the target application. For example, this is shown in FIG. 8. The terminal analyzes the animation file through the target application, based on the library file, obtains the target animation and the loop playback information, renders the target animation based on the library file, and then controls the playback of the target animation according to the loop playback information through the control function of the loop playback in the target application.

**In** this embodiment, for different animation files, there is no need to adjust the codes of the target application because the library file is integrated into the target application. This improves the development efficiency of the target application and reduces the error rate.

In an embodiment of the present application, the loop layer of the target animation is obtained, and the loop playback information corresponding to the target animation is obtained. Then, based on the loop layer and loop playback information, the target loop layer is generated. Finally, according to the target animation and the target loop layer, an animation file containing loop playback information is generated.

That is, in an embodiment of the present application, a target loop layer is generated according to the loop layer and the loop playback information, so that the target loop layer contains loop playback information and thus the animation file generated according to the target animation and the target loop layer contains loop playback information. In this way, the animation designer does not need to additionally give the loop playback information to the application engineer, the interaction between the animation designer and the application engineer is reduced, and the application engineer is not required to design the code corresponding to the loop playback information, so that the error rate is reduced and the development efficiency is improved.

According to an embodiment of the present application, an animation processing device is disclosed. The animation processing device could execute the above-mentioned animation processing method. Thus, the specific implementation details can refer to the description in the above method embodiment.

For example, as illustrated in FIG. 9, the animation processing device includes an obtaining module 901, a layer generation module 902, a file generation module 903

The obtaining module 901 is configured to obtain a loop layer of a target animation, and a loop playback information corresponding to the target animation.

The layer generation module 902 is configured to generate a target loop layer based on the loop layer and the loop playback information.

The file generation module 903 is configured to generate an animation file containing the loop playback information according to the target animation and the target loop layer.

Optionally, the layer generation module 902 is configured to:
display the loop layer of the target animation;
generate the target loop layer containing the loop playback information in response to an editing operation on the loop layer.

Optionally, the edit operation includes a first editing operation and a second editing operation, and the loop playback information comprises a start frame, an end frame and a playback number of loop playback.

Correspondingly, the layer generation module 902 is configured to:
determine the start frame and the end frame of the loop playback of the target animation in response to the first editing operation on the loop layer;
obtain the playback number of the loop playback in response to the second edit operation on the loop layer;
generate the target loop layer according to the start frame, the end frame and the playback number.

Optionally, the layer generation module 902 is configured to:
determine a first position and a second position where a time progress bar of the target animation is located in response to the first editing operation on the loop layer; and
determine an animation frame corresponding to the first position where the time progress bar of the target animation is located as the start frame of the loop playback, and determining an animation frame corresponding to the second position where the time progress bar is located as the end frame of the loop playback.

Optionally, the layer generation module 902 is configured to:
in response to the first editing operation on the loop layer, take a current position where the time progress bar of the target animation is located as the first position;
in response to a dragging operation of the time progress bar, taking a position to which the time progress bar is moved from the current position as the second position.

Optionally, the loop layer comprises an empty object layer of an animation editor.

Correspondingly, the layer generation module 902 is configured to:
display a layer selection interface, wherein the layer selection interface comprises an empty object layer control;
in response to a confirmation operation to the empty object layer control, display the empty object layer of the target animation.

Optionally, the layer generation module 902 is configured to:
get a startup instruction for an animation editor;
load a layer plug-in from a plug-in file of the animation editor according to the start-up instruction and start the animation editor to display a layer control corresponding to the layer plug-in in an interface of the animation editor;
in response to a trigger action on the layer control, display the loop layer of the target animation.

Optionally, the animation processing device further includes:
a storage module configured to:
obtain a code file corresponding to the loop layer;
generate the layer plug-in corresponding to the loop layer according to the code file corresponding to the loop layer;
store the layer plug-in in the plug-in file of the animation edit.

Optionally, the target animation comprises a plurality of segmented animations. Each segmented animation corresponds to a loop playback information respectively. The loop playback information corresponding to each segmented animation is stored in the same loop layer.

Correspondingly, the layer generation module 902 is configured to:
in response to the editing operation on the loop layer, generate the target loop layer containing the loop playback information according to the loop playback information corresponding to each segmented animation.

Optionally, the target animation comprises a plurality of segmented animations, and each segmented animation corresponds to a loop playback information stored in different loop layers of a plurality of loop layers.

Correspondingly, the layer generation module 902 is configured to:
take a first loop layers of the plurality of loop layers as a candidate loop layer;
display the candidate loop layer;
in response to an editing operation on the candidate loop layer, obtain the target loop layer containing a loop playback information corresponding to a segmented animation corresponding to the candidate loop layer;
taking a second loop layer of the plurality of loop layers as the candidate loop layer, and return to the steps displaying the candidate loop layer until the target loop layer corresponding to each segmented animation in the target animation is generated.

Optionally, the file generation module 903 is configured to:
analyze the target loop layer to obtain the loop playback information;
determine a start animation frame in the target animation corresponding to a starting indicator in the loop playback information;
when the start animation frame is a differential frame, modify the start animation frame to a key frame to obtain a modified target animation; and
generate the animation file corresponding to the target animation according to the modified target animation and the loop playback information.

Optionally, the file generation module 903 is configured to:
when the start animation frame is the differential frame, modify the start animation frame to be a key frame;
determine a number of target frames between the key frame closest to the start animation frame and the start animation frame in the target animation; and
when the number of target frames is less than a preset threshold, modify the key frame closest to the start animation frame to be a differential frame to obtain the modified target animation.

Optionally, the file generation module 903 is configured to:
analyze the target loop layer to obtain the loop playback information;
determine key frame information of the target animation according to the loop playback information; and
generate the animation file corresponding to the target animation according to the target animation, the loop playback information and the key frame information.

Optionally, the animation processing device further includes:
a resolution control module configured to:
obtain a library file, where the library file comprises an animation analysis rendering function and a loop playback information analysis control function;
integrate the library file into the target application;
when the animation file is imported into the target application, analyze the animation file based on the library file through the target application to obtain the target animation and the loop playback information; and
render the target animation based on the library file, and play the target animation based on the loop information.

Each module can be realized as an independent entity, or can be arbitrarily combined, and realized as the same or several entities, and the specific embodiment of each module and the corresponding beneficial effect can refer to the previous method embodiment, and will not be repeated herein.

The embodiment of the present disclosure also provides an electronic device, which may be a server or a terminal, etc., as shown in FIG. 10, which illustrates a schematic diagram of the electronic device according to an embodiment of the present disclosure.

The electronic device includes a processor 1001 having one or more processing cores, a memory 1002 having one or more computer-readable storage media, a power supply 1003, and an input unit 1004. Those skilled in the art can understand that the structure of the electronic device illustrated in FIG. 10 does not constitute a limitation of the electronic device, and may include more or fewer parts than illustrated, or the combination of certain parts, or different parts arrangement.

The processor 1001 is a control center of the electronic device, which utilizes various interfaces and lines to connect various parts of the entire electronic device, and performs various functions and processes data of the electronic device by running or executing computer programs and/or modules stored in the memory 1002 and calling the data stored in the memory 1002. Optionally, the processor 1001 may include one or more processing cores. Preferably, the processor 1001 can integrate an application processor and a modem processor, where the application processor mainly processes the operating system, the user interface and the application and the like, and the modem processor mainly processes wireless communication. Understandably, the aforementioned modem processor can also be left unintegrated into the processor 1001.

The memory 1002 can be used to store computer programs and modules, and the processor 1001 performs various functional applications and data processing by running computer programs and modules stored in memory 1002. The memory 1002 may mainly comprise a storage program area and a storage data area, wherein the storage program area can store the operating system, a computer program required for at least one function (such as a sound playback function, an image playback function). The storage data area can store data created based on the use of electronic devices. In addition, memory 1002 can include high-speed random access memory and can also include non-volatile memory, such as at least one disk storage device, flash memory device, or other volatile solid-state memory device. Correspondingly, memory 1002 may also include a memory controller to provide access from the processor 1001 to memory 1002.

The electronic device also comprises the power supply 1003 that supplies power to each component. Preferably, the power supply 1003 can be logically connected with the processor 1001 through a power management system, so that functions such as managing charging, discharging, and power consumption management are realized through the power management system. The power supply 1003 can also include any component such as one or more DC or AC power sources, recharging systems, power fault detection circuits, power converters or inverters, and power status indicators.

The electronic device may also include an input unit 1004 that can be used to receive input numeric or character information and to generate keyboard, mouse, joystick, optical, or trackball signal input related to user settings and function control.

Although not shown, the electronic device may also include a display unit which will not be repeated here. Specifically, in this embodiment, the processor 1001 in the electronic device will load the executable file corresponding to the process of one or more computer programs into the memory 1002 according to the following instructions. The processor 1001 will run the computer program stored in the memory 1002 to perform operations comprising:
obtaining a loop layer of a target animation, and obtaining a loop playback information corresponding to the target animation;
generating a target loop layer based on the loop layer and the loop playback information;
generating an animation file containing the loop playback information according to the target animation and the target loop layer.

The specific embodiment of each of the above operations and the corresponding beneficial effects can be found in the detailed description of the animation processing method above, and will not be repeated here.

A person skilled in the art may understand that all or part of the steps in the various methods of the above embodiments may be completed by a computer program or by controlling the relevant hardware through a computer program, and the computer program may be stored in a computer-readable storage medium and loaded and executed by a processor.

For this purpose, the embodiment of the present disclosure provides a computer-readable storage medium storing computer instructions executable by a processor to perform steps in any of the animation processing methods provided in the embodiment of the present disclosure. For example, the computer instructions can be executed to perform the following steps:
obtaining a loop layer of a target animation, and obtaining a loop playback information corresponding to the target animation;
generating a target loop layer based on the loop layer and the loop playback information;
generating an animation file containing the loop.

The specific embodiment of each of the above operations and the corresponding beneficial effects can be referred to in the previous embodiments, and will not be repeated here.

The computer readable storage medium may include a read only memory (ROM), a random access memory (RAM), disk or optical disc, etc.

Because the computer program stored in the computer-readable storage medium can perform the steps in any of the animation processing methods provided in the embodiments of the present disclosure, the advantageous effects that can be achieved by any of the animation processing methods provided in the embodiments of the present disclosure can be realized. Please refer to the previous embodiments for details, and will not be repeated herein.

Pursuant to one aspect of the present disclosure, a computer program product or computer program is provided that comprises computer instructions stored in a computer-readable storage medium. The processor of a computer device reads the computer instruction from a computer-readable storage medium, and the processor executes the computer instruction so that the computer device performs the animation processing method.

The above is a detailed introduction to an animation processing method, an apparatus, an electronic device, and a computer-readable storage media provided by the embodiment of the present disclosure, and the principle and embodiment of the present disclosure are described in this article by applying specific examples, and the description of the above embodiment is only used to help understand the method and the core idea of the present disclosure. At the same time, for those skilled in the art, there will be changes in the specific embodiment and scope of application according to the idea of the present disclosure, and in summary, the contents of this specification should not be construed as a restriction on the present disclosure.

## Claims

1. An animation processing method, comprising:
obtaining a loop layer of a target animation, and obtaining a loop playback information corresponding to the target animation;
generating a target loop layer based on the loop layer and the loop playback information; and
generating an animation file containing the loop playback information according to the target animation and the target loop layer.

2. The animation processing method of claim 1, wherein the step of generating the target loop layer based on the loop layer and the loop playback information comprises:
displaying the loop layer of the target animation; and
in response to an editing operation on the loop layer, generating the target loop layer containing the loop playback information.

3. The animation processing method of claim 2, wherein the editing operation comprises a first editing operation and a second editing operation, and the loop playback information comprises a start frame, an end frame and a playback number of loop playback; and the step of generating the target loop layer containing the loop playback information in response to the editing operation on the loop layer comprises:
in response to the first editing operation on the loop layer, determining the start frame and the end frame of the loop playback of the target animation;
in response to a second editing operation on the loop layer, obtaining the playback number of the loop playback; and
generating the target loop layer according to the start frame, the end frame and the playback number.

4. The animation processing method of claim 3, wherein the step of determining the start frame and the end frame of the loop playback of the target animation in response to the first editing operation on the loop layer comprises:
in response to the first editing operation on the loop layer, determining a first position and a second position where a time progress bar of the target animation is located; and
determining an animation frame corresponding to the first position where the time progress bar of the target animation is located as the start frame of the loop playback, and determining an animation frame corresponding to the second position where the time progress bar is located as the end frame of the loop playback.

5. The animation processing method of claim 4, wherein determining the first position and the second position where the time progress bar of the target animation is located in response to the first editing operation on the loop layer comprises:
in response to the first editing operation on the loop layer, taking a current position where the time progress bar of the target animation is located as the first position; and
in response to a dragging operation of the time progress bar, taking a position to which the time progress bar is moved from the current position as the second position.

6. The animation processing method of claim 2, wherein the loop layer comprises an empty object layer of an animation editor, and the step of displaying the loop layer of the target animation comprises:
displaying a layer selection interface, wherein the layer selection interface comprises an empty object layer control; and
in response to a confirmation operation to the empty object layer control, displaying the empty object layer of the target animation.

7. The animation processing method of claim 2, wherein the step of displaying the loop layer of the target animation comprises:
getting a startup instruction for an animation editor;
loading a layer plug-in from a plug-in file of the animation editor according to the start-up instruction and starting the animation editor to display a layer control corresponding to the layer plug-in in an interface of the animation editor; and
in response to a trigger action on the layer control, displaying the loop layer of the target animation.

8. The animation processing method of claim 7, further comprising following steps before obtaining the startup instruction of the animation editor:
obtaining a code file corresponding to the loop layer;
generating the layer plug-in corresponding to the loop layer according to the code file corresponding to the loop layer; and
storing the layer plug-in in the plug-in file of the animation editor.

9. The animation processing method of claim 2, wherein the step of displaying the loop layer of the target animation comprises:
obtaining an installation package of an animation editor, wherein the installation package comprises a code file corresponding to a looping image;
according to the installation package, performing an installation operation of the animation editor so that an interface of the animation editor includes a prominent control; and
in response to a trigger action on the prominent control, displaying the loop layer of the target animation is displayed.

10. The animation processing method of claim 2, wherein the target animation comprises a plurality of segmented animations, each segmented animation corresponds to a loop playback information respectively, and the loop playback information corresponding to each segmented animation is stored in the same loop layer; and the step of generating the target loop layer containing the loop playback information in response to the editing operation on the loop layer comprises:
in response to the editing operation on the loop layer, generating the target loop layer containing the loop playback information according to the loop playback information corresponding to each segmented animation.

11. The animation processing method of claim 10, wherein the step of generating the target loop layer containing the loop playback information according to the loop playback information corresponding to each segmented animation in response to the editing operation on the loop layer comprises:
**In** response to a first editing operation on the loop layer, determining a start frame and an end frame of the segmented animation in the target animation;
in response to a second editing operation on the loop layer, obtaining the loop number of the segmented animation;
returning to perform the step of determining the start frame and the end frame of the segmented animation in the target animation in response to the first editing operation until the loop playback information of each segmented animation is obtained; and
generating the target loop layer according to the loop playback information of each segmented animation.

12. The animation processing method of claim 2, wherein there are a plurality of loop playback information; and the step of generating the target loop layer containing loop playback information in response to the editing operation on the loop layer comprises:
in response to a plurality of editing operations on the loop layer, obtaining the plurality of loop playback information of the target animation; and
recording the plurality of loop playback information in the loop layer to obtain the target loop layer.

13. The animation processing method of claim 2, wherein the target animation comprises a plurality of segmented animations, and each segmented animation corresponds to a loop playback information stored in different loop layers of a plurality of loop layers; and the step of generating the target loop layer containing the loop playback information in response to an editing operation on the loop layer comprises:
taking a first loop layers of the plurality of loop layers as a candidate loop layer;
displaying the candidate loop layer;
in response to an editing operation on the candidate loop layer, obtaining the target loop layer containing a loop playback information corresponding to a segmented animation corresponding to the candidate loop layer; and
taking a second loop layer of the plurality of loop layers as the candidate loop layer, and returning to the steps displaying the candidate loop layer until the target loop layer corresponding to each segmented animation in the target animation is generated.

14. The animation processing method of claim 1, wherein the step of generating the animation file containing the loop playback information according to the target animation and the target loop layer comprises:
analyzing the target loop layer to obtain the loop playback information;
determining a start animation frame in the target animation corresponding to a starting indicator in the loop playback information;
when the start animation frame is a differential frame, modifying the start animation frame to a key frame to obtain a modified target animation; and
generating the animation file corresponding to the target animation according to the modified target animation and the loop playback information.

15. The animation processing method of claim 14, wherein the step of modifying the start animation frame to a key frame to obtain the modified target animation when the start animation frame is a differential frame comprises:
when the start animation frame is the differential frame, modifying the start animation frame to be a key frame;
determining a number of target frames between the key frame closest to the start animation frame and the start animation frame in the target animation; and
when the number of target frames is less than a preset threshold, modifying the key frame closest to the start animation frame to be a differential frame to obtain the modified target animation.

16. The animation processing method of claim 1, wherein the step of generating the animation file containing the loop playback information according to the target animation and the target loop layer comprises:
analyzing the target loop layer to obtain the loop playback information;
determining key frame information of the target animation according to the loop playback information; and
generating the animation file corresponding to the target animation according to the target animation, the loop playback information and the key frame information.

17. The animation processing method according to any one of claims 1-16, further comprising following steps after the step of generating the animation file containing the loop playback information according to the target animation and the target loop layer:
obtaining a library file, wherein the library file comprises an animation analysis rendering function and a loop playback information analysis control function;
integrating the library file into the target application;
when the animation file is imported into the target application, analyzing the animation file based on the library file through the target application to obtain the target animation and the loop playback information; and
rendering the target animation based on the library file, and playing the target animation based on the loop information.

18. An animation processing device, comprising:
an obtaining module, configured to obtain a loop layer of a target animation, and a loop playback information corresponding to the target animation;
a layer generation module, configured to generate a target loop layer based on the loop layer and the loop playback information; and
a file generation module, configured to generate an animation file containing the loop playback information according to the target animation and the target loop layer.

19. An electronic device, comprising a processor and a memory storing computer instructions executable by the processor to perform the animation processing method as claimed in any one of claims 1 to 16.

20. A computer-readable storage medium storing computer instructions executable by a processor to perform the animation processing method as claimed in any one of claims 1 to 16.
